(19) Europäisches Patentamt
European Patent Office
Office européen des brevets

(11) **EP 4 693 015 A1**

(12) **EUROPEAN PATENT APPLICATION**
published in accordance with Art. 153(4) EPC

(43) Date of publication:
**11.02.2026 Bulletin 2026/07**

(21) Application number: **24780362.0**

(22) Date of filing: **26.03.2024**

(51) International Patent Classification (IPC):
*G06F 3/12* (2006.01)   *B41M 1/04* (2006.01)
*G06N 20/00* (2019.01)

(52) Cooperative Patent Classification (CPC):
**B41M 1/04; G06F 3/12; G06N 20/00**

(86) International application number:
**PCT/JP2024/012060**

(87) International publication number:
**WO 2024/204254 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **31.03.2023 JP 2023058203**

(71) Applicant: **Asahi Kasei Kabushiki Kaisha Tokyo 100-0006 (JP)**

(72) Inventors:
• **FURUKAWA, Masashi**
  **Tokyo 100-0006 (JP)**
• **FUJIKI, Yuzo**
  **Tokyo 100-0006 (JP)**
• **NAKAMURA, Akinao**
  **Tokyo 100-0006 (JP)**
• **MATSUURA, Hiroki**
  **Tokyo 100-0006 (JP)**
• **KIMURA, Ippei**
  **Tokyo 100-0006 (JP)**

(74) Representative: **D Young & Co LLP 3 Noble Street London EC2V 7BQ (GB)**

(54) **PLANNING ASSISTANCE DEVICE, INFORMATION PROCESSING METHOD, AND PROGRAM**

(57)    To provide a assistance device, an information processing method using the device, and a program with which an appropriate plate-making condition and printing condition can be grasped without performing a printing step.

A assistance device including:
a prediction unit that predicts printing quality information indicating printing quality in predetermined gradation of printed matter based on plate-making condition information indicating a plate-making condition for a printing plate and printing condition information indicating a printing condition for obtaining the printed matter using the printing plate manufactured under the plate-making condition; and
a recommendation unit that outputs recommended condition information indicating a recommended condition for the plate-making condition or the printing condition based on the printing quality information and target quality information indicating a target index related to the printing quality.

Fig. 4A

EP 4 693 015 A1

## Description

### Technical Field

The present invention relates to a assistance device, an information processing method, and a program.

### Background Art

For example, Patent Literature 1 discloses a printing system that can easily grasp a plate-making condition and a printing condition for obtaining high-quality printed matter in flexographic printing.

### Citation List

### Patent Literature

Patent Literature 1: Japanese Patent Laid-Open No. 2016-049768

### Summary of Invention

### Technical Problem

However, in the printing system disclosed in Patent Literature 1, it is necessary to actually print an original image by a printing unit, and measure a characteristic of the original image from an evaluation region of the original image. Thus, condition adjustment is performed in the same way as conventional condition adjustment such that printing is actually performed multiple times until a desired plate-making condition and printing condition are determined.

The present invention has been made in view of the problem described above, and aims at providing a assistance device, an information processing method using the device, and a program with which an appropriate plate-making condition and printing condition can be grasped without performing a printing step.

### Solution to Problem

[1] A assistance device comprising:

a prediction unit that predicts printing quality information indicating printing quality in predetermined gradation of printed matter based on plate-making condition information indicating a plate-making condition for a printing plate and printing condition information indicating a printing condition for obtaining the printed matter using the printing plate manufactured under the plate-making condition; and

a recommendation unit that outputs recommended condition information indicating a recommended condition for the plate-making condition or the printing condition based on the printing quality information and target quality information indicating a target index related to the printing quality.

[2] The assistance device according to [1], wherein the plate-making condition information includes a condition for manufacturing a flexographic printing plate from a flexographic printing original plate.

[3] The assistance device according to [1] or [2], wherein the printing condition information includes at least one of a printing machine condition, an anilox condition, an ink condition, a printing base material condition, and a cushion tape condition.

[4] The assistance device according to any one of [1] to [3], wherein the printing quality information includes at least one of pieces of information about ink density, a Ink coverage predicted value, an ink usage predicted value, and a predicted minimum readable font size.

[5] The assistance device according to any one of [1] to [4], wherein the printing quality information includes a print curve or at least one of the number, sizes, or shapes of dots in the printed matter at a predetermined gradation part.

[6] The assistance device according to any one of [1] to [5], further comprising:
a target value output unit that outputs the target quality information based on design image information.

[7] The assistance device according to [1], further comprising:
a learning unit that creates a model based on data for learning obtained by associating with each other the plate-making condition for the printing plate, the printing condition for the printed matter using the printing plate manufactured under the plate-making condition, and printing quality indicating an index of printing quality in gradation of the printed matter.

[8] An information processing method performed by a assistance device, the method comprising:

a prediction step of outputting printing quality information indicating printing quality in predetermined gradation of printed matter based on plate-making condition information indicating a plate-making condition for a printing plate and printing condition information indicating a printing condition for the printed matter using the printing plate manufactured under the plate-making condition; and

a recommendation step of outputting recommended condition information indicating a recommended condition for the plate-making condition or the printing condition based on the printing quality information and target quality information indicating a target index related to the printing quality.

[9] A program that causes a assistance device to perform:

a prediction step of outputting printing quality information indicating printing quality in predetermined gradation of printed matter based on plate-making condition information indicating a plate-making condition for a printing plate and printing condition information indicating a printing condition for the printed matter using the printing plate manufactured under the plate-making condition; and
a recommendation step of outputting recommended condition information indicating a recommended condition for the plate-making condition or the printing condition based on the printing quality information and target quality information indicating a target index related to the printing quality.

**Advantageous Effect of Invention**

The present invention can provide a assistance device, an information processing method using the device, and a program with which an appropriate plate-making condition and printing condition can be grasped without performing a printing step.

**Brief Description of Drawings**

[Figure 1] Figure 1 shows a diagram illustrating a system configuration of the present embodiment.

[Figure 2A] Figure 2A shows a schematic configuration diagram of a assistance device of the present embodiment.

[Figure 2B] Figure 2B shows a schematic diagram illustrating an example of a data structure of print data.

[Figure 2C] Figure 2C shows a schematic diagram illustrating an example of a data structure of data for learning.

[Figure 2D] Figure 2D shows a diagram illustrating a specific example of the print data.

[Figure 2E] Figure 2E shows a schematic diagram illustrating an example of a model used by a prediction unit.

[Figure 2F] Figure 2F shows a diagram illustrating a result of prediction accuracy of the model used by the prediction unit.

[Figure 2G] Figure 2G shows a diagram illustrating explanatory variables having high importance.

[Figure 2H] Figure 2H shows a diagram illustrating explanatory variables having high importance.

[Figure 3A] Figure 3A shows a configuration diagram illustrating a relation between a correction curve and a print curve.

[Figure 3B] Figure 3B shows a schematic diagram illustrating an aspect of gradation expression in a case of beautiful fading.

[Figure 3C] Figure 3C shows a schematic diagram illustrating an aspect of gradation expression having a hard edge.

[Figure 3D] Figure 3D shows a schematic diagram illustrating an aspect of gradation expression in which a tone is reversed.

[Figure 4A] Figure 4A shows a flowchart illustrating an example of processing performed by a formulation device of the present embodiment.

[Figure 4B] Figure 4B shows a flowchart illustrating an example of processing performed by the formulation device of the present embodiment.

**Description of Embodiments**

The following describes an embodiment of the present invention (hereinafter, referred to as a "present embodiment") in detail. However, the present invention is not limited thereto, and can be variously modified without departing from the gist of the invention.

1. Assistance device

A assistance device of the present embodiment includes: a prediction unit that predicts printing quality information indicating printing quality in predetermined gradation of printed matter based on plate-making condition information indicating a plate-making condition for a printing plate and printing condition information indicating a printing condition for the printed matter using a printing plate manufactured under the plate-making condition, and a recommendation unit that outputs recommended condition information indicating a recommended condition for the plate-making condition or the printing condition based on printing quality information and target quality information indicating a target index related to printing quality.

The present invention can be applied to offset printing, gravure printing, and flexographic printing. The following describes the present embodiment by exemplifying a case of flexographic printing. However, the present embodiment is not limited thereto, and can be similarly applied to offset printing and gravure printing.

In a conventional process of flexographic printing, before performing mass printing, manufacture of a flexographic printing plate and printing are repeatedly performed to obtain a plate-making/printing condition for achieving a target value of color density based on a design of a digital image that is called a vector image, and a color density condition for improving ink density, a Ink coverage, and the like is searched for. Manufacture of the flexographic printing plate and printing are repeated to obtain the plate-making/printing condition for achieving a gradation property, and a gradation property condition for stably printing dots and the like is searched for.

The "dots" indicate mesh-like points for representing shading of the printed matter. The dot may also be called a halftone dot. For example, in flexographic printing, when printed matter printed with C (cyan) is seen through a microscope, multiple number of small printed points are seen. This point is referred to as a dot, and the printed matter is represented by a collection of dots. Typically, a color is represented to be lighter as the dot is smaller and the number of the dots per unit area is smaller, and a color is represented to be dark as the dot is larger and the number of the dots per unit area is larger. Printed matter with shading is reproduced by combining the size of the dot and the number of the dots per unit area. In a case of reproducing gradation of a photograph, a pattern (monochrome/color), and the like by printing, shading may be represented by a ratio between a white portion of paper to be subjected to printing, and the size of the dot and the number of the dots per unit area.

Information about the dot includes three elements such as "screen ruling" indicating the number of dots present within 1-inch width, an "angle" that is set to prevent moire from being caused, and "density" for varying shading.

In this searching process for the color density condition and the gradation property condition, a test pattern suitable for evaluating each of the conditions may be used instead of a digital image as a printing target. In this case, an appropriate manufacturing condition and printing condition are searched for by creating a flexographic printing plate on which a test pattern is formed under various manufacturing conditions, and performing printing with the obtained flexographic printing plate under various printing conditions. Due to this, it is possible to search for the manufacturing condition and the printing condition suitable for ink, plate-making equipment, and printing equipment to be used.

Subsequently, for example, a design is created by dividing a vector image per ink color such as cyan, magenta, yellow, and black. The divided design is subjected to Raster image processor(RIP), and color density and a dot size are determined for each divided design to create a raster image. The raster image is digital data for creating a flexographic printing plate.

A multicolored-printing test is then performed, and a condition for performing printing with high reproducibility is determined. Through the above processes, the flexographic printing plate that enables mass printing and the printing condition therefor are determined. Decision of the plate-making condition and the printing condition often depends on an expert, and a plurality of times of tests are required to determine the conditions, so that the entire process described above may take one and a half years or more.

One of reasons why such a test is required is that a printing plate is pressed against a printing base material to be deformed at the time of printing because the printing plate is made of rubber in many cases. Specifically, when printing is performed by using a printing plate having projections and depressions corresponding to the dots, the projections and depressions are deformed due to the printing condition, and sizes and shapes of the dots to be printed are somewhat different from the projections and depressions of the printing plate.

Herein, printing quality may be predicted by directly predicting a deformation phenomenon of the projections and depressions on the printing base material, but data for learning including the deformation phenomenon cannot be easily obtained. Additionally, prediction of the printing quality aims at prediction of the size and shape of the dot, and does not aim at deformation itself of the projections and depressions of the printing plate.

Thus, in the assistance device of the present embodiment, by considering the plate-making condition information that affects the shape, hardness, and the like of the printing plate, and the printing condition information that affects an ink amount, pressing intensity, and the like, determination is made while considering a deformation phenomenon of the projections and depressions on the printing base material, and the printing quality such as the size, the shape, and the Ink coverage of the dot after printing is predicted accordingly. By performing such prediction, in the conventional printing process described above, a condition under which the dot can be stably printed can be searched for by using an information processing technique, and the plate-making condition and the printing condition can be specified without performing a printing test.

Particularly, the assistance device of the present embodiment outputs the recommended condition information indicating a recommended condition for the plate-making condition or the printing condition based on printing quality in gradation. Additionally, the assistance device of the present embodiment may also search for a condition for improving ink density and the Ink coverage by using an information processing technique.

With the assistance device of the present embodiment, the appropriate plate-making condition and printing condition can be grasped without performing the printing step, and a processing load of the information processing device can be obviously reduced as compared with a method of directly physically calculating the deformation phenomenon of the projections and depressions on the printing base material based on the shape and the hardness of the printing plate, the ink amount, and pressing force, and calculating the size of the dot based on a deformation amount thereof, as an information processing method.

1.1. Hardware configuration

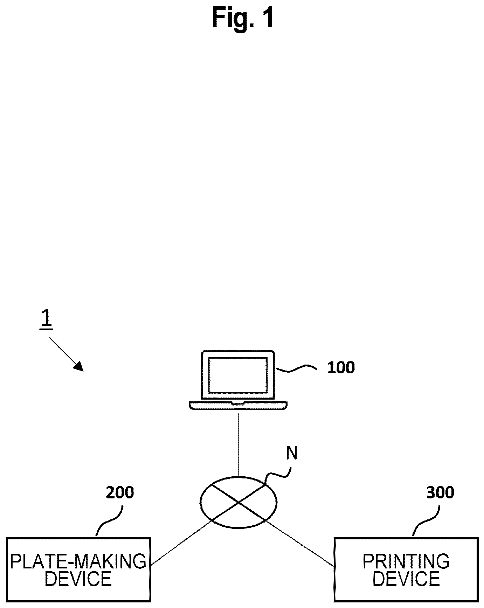

Figure 1 illustrates an example of the present system. The present system is a formulation support system indicating recommended conditions for a plate-making condition for a plate-making device 200 and a printing condition for a printing device 300. A assistance device 100 of the present embodiment may be connected to the plate-making device 200 and the printing device 300 via a network. In the present embodiment, the plate-making device 200 may be a manufacturing device for a flexographic printing plate, and the printing device 300 may be a printing machine that executes a flexographic printing method. As the plate-making device 200 and the printing device 300, well-known conventional devices can be used.

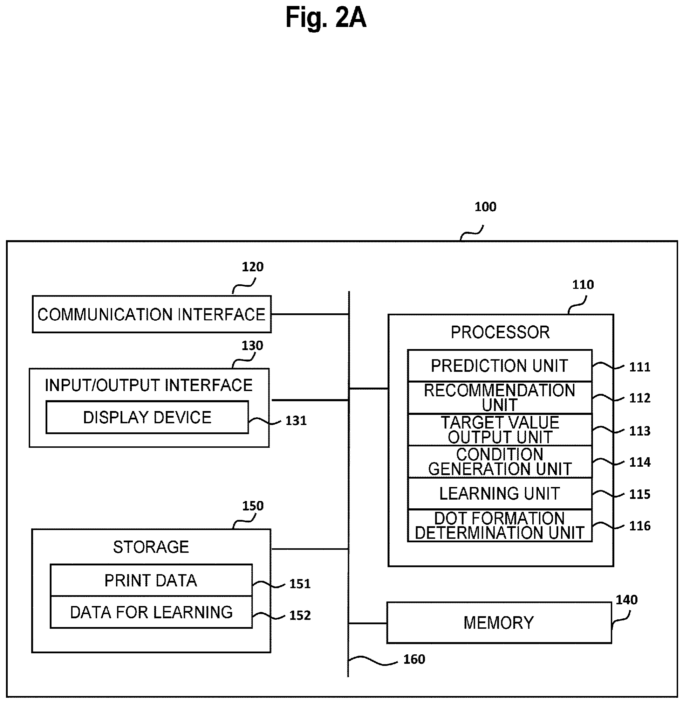

Figure 2A illustrates a schematic configuration diagram of the assistance device 100 of the present embodiment. The assistance device of the present embodiment may be a general-purpose computer such as a personal computer and a server. As illustrated in Figure 2A, the assistance device 100 includes, for example, a processor 110, a communication interface 120, an input/output interface 130, a memory 140, a storage 150, and one or a plurality of buses 160 for interconnecting these constituent elements.

The processor 110 is not limited to but includes, by way of example, one or a plurality of central processing units (CPU), a microprocessor (MPU), a graphics processing unit (GPU), a processor core, a multiprocessor, an Application Specific Integrated Circuit (ASIC), a Field Programmable Gate Array (FPGA), and the like, and may implement processing, functions, or methods disclosed in each embodiment by an integrated circuit (IC) chip, an LSI, or a dedicated circuit.

The communication interface 120 transmits/receives various kinds of data to/from another device via a network. This communication may be performed in any of a wired manner or a wireless manner, and any communication protocol may be used so long as the communication can be performed with each other. For example, the communication interface 120 may be implemented as hardware such as a network adapter, various kinds of software for communication, or a combination thereof.

The input/output interface 130 includes an input device to which various operations are input, and an output device that outputs a processing result and the like. For example, the input/output interface 130 may include an information input device such as a keyboard, a mouse, and a touch panel, and an information output device such as a display device 131. The assistance device 100 may receive a predetermined input or may perform predetermined output by connecting the input/output interface 130 as an external device thereto.

For example, the assistance device 100 may output recommended conditions for the plate-making condition and the printing condition to the plate-making device 200 and the printing device 300.

The memory 140 temporarily stores a program loaded from the storage 150, and provides a working area to the processor 110. The memory 140 also temporarily stores various kinds of data generated during a period in which the processor 110 executes the program. The memory 140 may be, for example, a high-speed random access memory such as a DRAM, an SRAM, a DDR RAM, or another random access solid-state storage device, or may be a combination thereof.

The storage 150 stores a program, functional units, and various kinds of data. The storage 150 may store print data 151 and data for learning 152, for example.

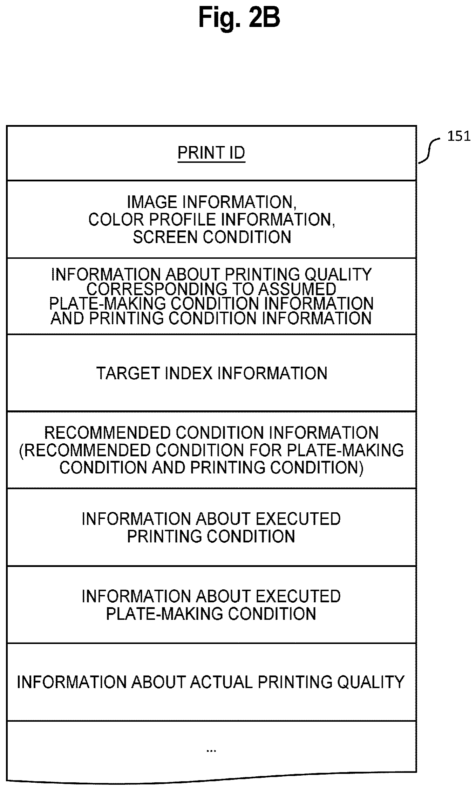

As illustrated in Figure 2B, in the print data 151, a printing ID that can uniquely specify printing to be performed, information about a digital image to be printed, information about the plate-making condition for the flexographic printing plate used for printing the digital image, and information about the printing condition for the printing plate may be recorded in association with each other.

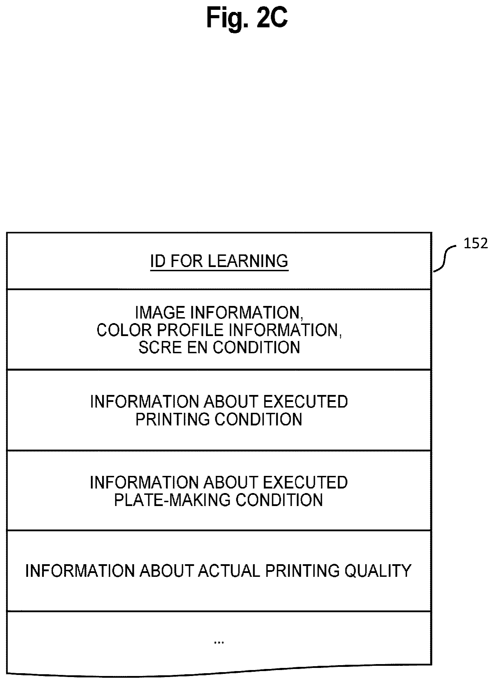

As illustrated in Figure 2C, in the data for learning 152, an ID for learning that can uniquely specify past printing, information about a printed image, information about the plate-making condition for a plate used for printing the image, information about the printing condition for the image, and information about quality thereof may be recorded in association with each other.

The storage 150 may be, for example, one or plurality of magnetic disc storage devices, an optical disc storage device, a flash memory device, or a nonvolatile memory such as another nonvolatile solid-state storage device, or may be a combination thereof. As another example of the storage 150, one or a plurality of storage devices disposed at a distance from the processor 110 can be exemplified.

### 1.2. Software configuration

The processor 110 executes processing, a function, or a method implemented by a code or a command included in the program stored in the storage 150. As illustrated in Figure 2A, the processor 110 of the present embodiment may function as a prediction unit 111, a recommendation unit 112, a target value output unit 113, a condition generation unit 114, a learning unit 115, and a dot formation determination unit 116. The following describes each of the functional units.

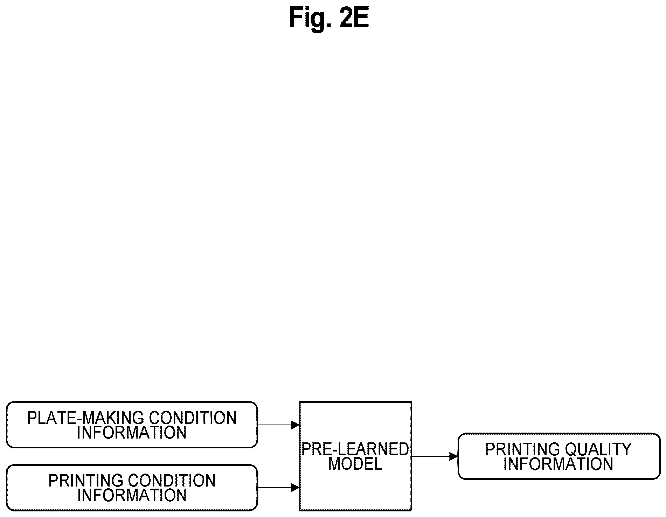

The prediction unit 111 outputs printing quality information indicating printing quality in predetermined gradation of the printed matter based on the plate-making condition information indicating the plate-making condition for the printing plate and the printing condition information indicating the printing condition for the printed matter using the printing plate manufactured under the plate-making condition. Although there is no particular limitation, for example, the prediction unit 111 may output the printing quality information based on the plate-making condition information and the printing condition information using a pre-learned model as illustrated in Figure 2E.

As the pre-learned model, although there is no particular limitation, in a case in which the printing quality information is a quantitative variable, for example, it is possible to employ a model using multiple regression analysis, ridge regression, partial least squares regression, a multilayer perceptron, a neural network such as a Convolutional Neural Network (CNN) and a Recurrent Neural Network (RNN), a support vector machine using an optional kernel function such as a Gaussian kernel, random forest modeled as a regression tree, a hidden Markov model, and the like, and various other models such as a statistical model and a stochastic model. It is also possible to employ a model that makes comprehensive determination by combining various models. Additionally, in a case of a qualitative variable, various discrimination and analysis methods such as logistic regression, a random forest, and a neural network may be used.

The following describes the plate-making condition information, the printing condition information, and the printing quality information. The following describes an aspect of the plate-making condition information, the printing condition information, and the printing quality information, but the plate-making condition information, the printing condition information, and the printing quality information are not limited thereto.

First, a plate-making method for the flexographic printing plate in the plate-making device 200 is not particularly limited, but a method for emitting radiation to a printing original plate to perform pattern engraving processing is exemplified. Back exposure or surface exposure may be performed before or after the engraving processing, or development may be performed after the engraving processing. The plate-making method for the flexographic printing plate may be different depending on a type of the printing original plate.

The radiation used for pattern formation of the printing plate may be appropriately selected in accordance with a configuration of the printing original plate. Such radiation is not particularly limited, but may be laser light, ultraviolet rays, infrared rays, visible rays, X-rays, an electron beam, and the like, for example. For example, laser light may be emitted to the printing original plate to perform pattern engraving processing. If the printing original plate has an infrared ablation layer, infrared rays may be emitted thereto to perform pattern engraving processing. In this case, the infrared ablation layer serves as a mask image at the time of being exposed and cured. When an unexposed part of a photosensitive resin composition layer is washed out after the exposure is ended, the infrared ablation layer may also be removed at the same time.

The plate-making condition information for such a flexographic printing plate is not particularly limited but includes a condition for manufacturing the flexographic printing plate from a flexographic printing original plate, and examples thereof include a type of an original plate, a type of a microcell, information about radiation, a correction curve, screen ruling of an image, a type of a screen, an angle of a screen, and the like.

Although there is no particular limitation, information about a type of an original plate, a type of a microcell, and radiation may be mainly the plate-making condition related to color density or a Ink coverage, and a correction curve, screen ruling of an image, a type of a screen, an angle of a screen, and the like may be mainly the plate-making condition related to gradation expression.

As the information about radiation, intensity of radiation and the like are exemplified. An uneven shape of engraving is changed corresponding to the intensity of radiation and the like, and color density or a Ink coverage of the printed matter obtained by using the flexographic printing plate may be changed. Appropriate information about the radiation is preferably set while considering the printing condition such as a contact pressure between an anilox roll and a plate cylinder, and a contact pressure between the printing base material and the plate cylinder in addition to the plate-making condition such as a type of an original plate and a type of a microcell.

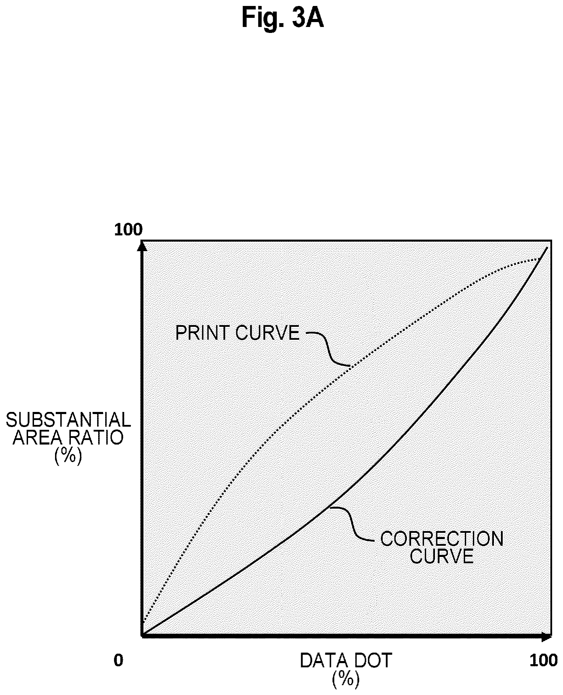

The correction curve is a curve indicating a relation between ink density and a pixel area ratio per unit area (hereinafter, "data dot%") in raster image data of the flexographic printing plate based on a print curve. Figure 3A illustrates a relation between the correction curve and the print curve. The flexographic printing plate has elasticity, so that a contact area between the printing base material and the plate cylinder is increased corresponding to a printing pressure. Thus, actual ink density tends to be higher than ink density that is estimated from an area of an outermost surface of the flexographic printing plate. Thus, from a viewpoint of making the flexographic printing plate to obtain a desired image when the contact area between the printing base material and the plate cylinder is increased due to the printing pressure, it is preferable to create the correction curve while considering an increase of the contact area based on the print curve representing a relation between the actual ink density and the data dot%.

By way of example, a standardized print curve is specified in ISO 12647-2 and the like, and a dot size and the like of the plate may be corrected to adjust the print curve obtained under a predetermined printing condition to match such a standardized curve. For this correction, the correction curve is used. For example, flexographic printing is a printing process for perform printing on all types of soft and hard base materials such as plastic, paper, a carton, a film, metal, or the like, and these base materials have different thicknesses and surface characteristics. Not only the printing base material but also the ink and the plate have large influence. Thus, the print curve is greatly different depending on the printing condition.

The correction curve may be created by plotting the data dot% and the ink density corresponding to the data dot%. As an example of a method for creating such a correction curve, the method disclosed in US 11,575,806 B2 may be used.

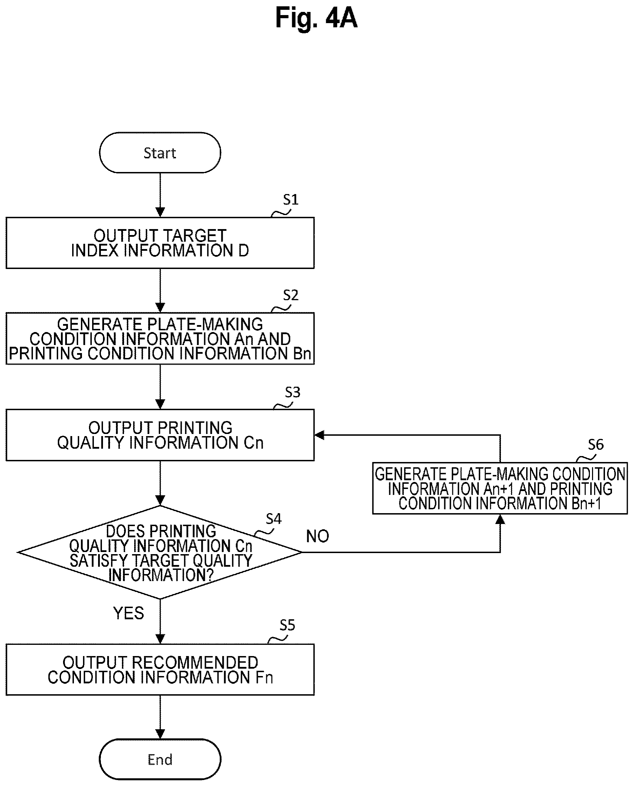

Herein, as illustrated in Figure 4A, the print curve means a curve obtained by plotting a relation between the data dot% and a substantial area ratio calculated by Murray-Davies formula with Tone Value Increment (TVI). The Tone Value Increment (TVI) is a numerical value representing a difference between a Tone Value and Tone, and is also called a dot gain. In the Murray-Davies formula, assuming that a colorimetric value of data dot% as a calculation target of the substantial area ratio is X in certain monochromatic gradation, the substantial area ratio corresponding to target data dot% is represented by the following expression. The data dot% may also be referred to as an area ratio on data. The colorimetric value may be ink density.

$$\text{Substantial area ratio} = \{(Xw - X)/(Xw - Xs)\} \times 100$$

Xw: colorimetric value of area ratio 0% (paper white)

Xs: colorimetric value of area ratio 100% (solid)

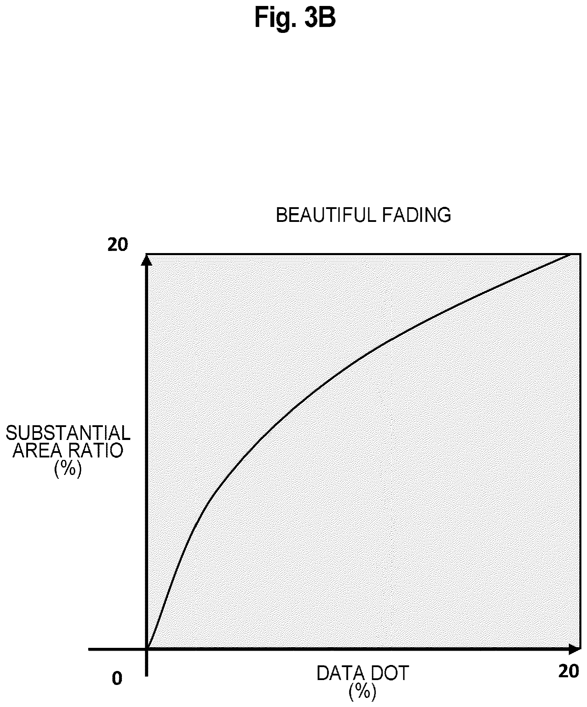

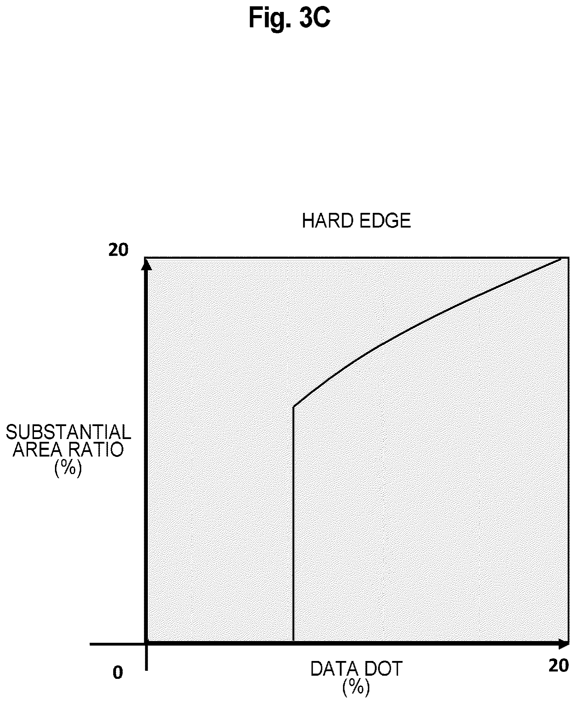

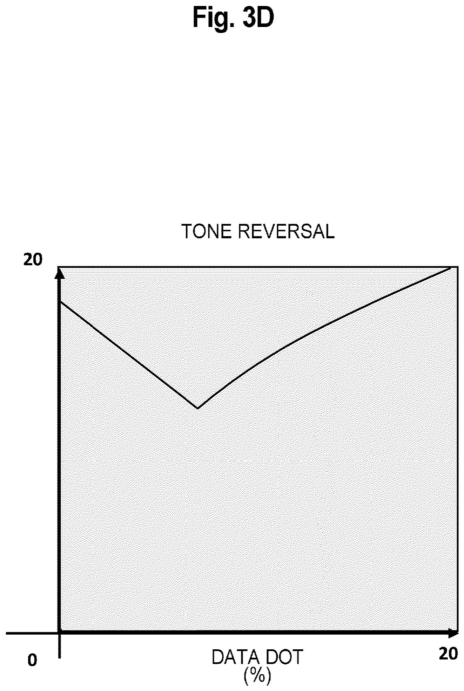

A screen is a control algorithm for determining the sizes and the number of dots formed on a surface of the printing original plate. In printing using dots, gradation expression can be achieved such that shading is expressed by performing printing with ink to be small points and controlling the number, sizes, and shapes of the points. By setting the screen to enable appropriate gradation expression in addition to setting of the correction curve described above, the printing plate that enables appropriate gradation expression can be obtained. On the other hand, in a case in which setting of the screen is inappropriate even if the manufacturing method for the printing plate other than the screen is the same, gradation expression particularly in a light portion becomes insufficient, and a hard edge as illustrated in Figure 3C, tone reversal as illustrated in Figure 3D, and the like may be caused. On the other hand, in a case in which setting of the screen is appropriate, fine gradation expression with beautiful fading as illustrated in Figure 3B is enabled.

A screen image parameter is information about a raster image corresponding to the screen, for example, an image of printed matter obtained when a certain screen is used represented as information about the raster image. The screen image parameter may include parameters such as the number, sizes, and shapes of the dots in each gradation region obtained by applying the screen. In the storage 150 of the assistance device 100 in the present embodiment, the type of the screen and the screen image parameters such as the number, sizes, and shapes of the dots in each gradation region obtained by applying the screen may be recorded in association with each other.

Although there is no particular limitation, in the flexographic printing method, for example, the ink is supplied from the anilox roll to the flexographic printing plate (plate cylinder), and the ink is transferred to the printing base material from the flexographic printing plate (plate cylinder) to which the ink is supplied.

The printing condition information for the flexographic printing method is not particularly limited, but includes: an ink condition such as viscosity, solid content density, and pigment density; information about the anilox roll such as a cell shape, screen ruling, and capacity; information about a printing machine such as a model of a printing machine, a printing speed, a contact pressure between the anilox roll and the plate cylinder, a contact pressure between the printing base material and the plate cylinder, a drying speed, a sleeve peripheral length; a cushion tape condition such as a type, hardness, and thickness of cushion tape for fixing the flexographic printing plate to the plate cylinder; a printing base material condition such as a type of the printing base material; and surface free energy, for example. Among these, at least one of a printing machine condition, an anilox condition, the ink condition, the printing base material condition, and the cushion tape condition is preferably included in the printing condition information. The anilox condition may be a condition related to the anilox roll such as a type of the anilox roll and a contact pressure between the anilox roll and the plate cylinder.

The printing quality information is information representing quality of the printed matter, and includes printing quality in predetermined gradation. The "predetermined gradation" is not particularly limited, but may include a shadow part, a halftone part, and a highlighted part, for example. Herein, based on the substantial area ratio calculated for the printed matter by Murray/Davies formula, for example, it may be assumed that a region in which the substantial area ratio is 100% is a solid part, a region in which the substantial area ratio is equal to or larger than 80% and smaller than 100% is a shadow part, a region in which the substantial area ratio is equal to or larger than 20% and smaller than 80% is a halftone part, and a region in which the substantial area ratio is equal to or larger than 0% and smaller than 20% is a highlighted part. Herein, as a target value of the printing quality, a target value may be set based on a criterion and a standard described in existing literatures.

Indexes of printing quality in each type of gradation may be different among the shadow part, the halftone part, and the highlighted part. For example, the indexes of the printing quality at the highlighted part are not particularly limited, but may include, for example, ink density, a print curve, or the number, sizes, or shapes of the dots at the highlighted part. Conventionally, ink density of the printed matter is measured as the index of the printing quality. Herein, the ink density is obtained by measuring intensity of reflected light from the printed matter. Thus, it is difficult to measure the intensity of the reflected light from the printing unit particularly at the highlighted part with low gradation, so that the quality cannot be appropriately evaluated with only the ink density in some cases. From this viewpoint, whether the dots are appropriately formed by printing can be evaluated by considering the indexes about the dots such as the number, sizes, or shapes of the dots, so that the quality at the highlighted part can be evaluated more appropriately. The shape of the dot may be circularity, a long/short ratio, or the like.

Specifically, it is difficult to discriminate among Figure 3B to Figure 3D with only the index of ink density. The ink density of the solid part cannot be easily compatible with the printing quality of the highlighted part. For example, a trade-off may be caused between the ink density and the printing quality of the highlighted part such that fading tends to be disturbed when the ink density is increased, and printed matter with beautiful fading tends to be obtained when the ink density is low. At conventional printing sites, a present situation is that a person sees printed matter, and discriminates among Figures 3B, 3C, and 3D to find an optimum condition. However, with the assistance device of the present embodiment, a condition for achieving beautiful fading as illustrated in Figure 3B can be found by considering the number, sizes, shapes, and the like of the dots.

Also at the shadow part and the halftone part, the printing quality information may include a print curve or at least one of the number, sizes, or shapes of the dots in the printed matter at a predetermined gradation part.

A target value of the number, sizes, or shapes of the dots may be set based on a minimum dot in a certain color in a raster image for a printing test. An excessively small dot cannot be stably formed, so that a minimum value of a printable dot may be technically limited. Thus, the dot formation determination unit 116 may determine whether the dot can be formed based on the plate-making condition information and the printing condition information, and if the dot can be formed, may repeatedly estimate the size of the dot that can be formed, and perform optimization processing for searching for a condition under which the minimum dot can be formed. A model may be used for determining whether the dot can be formed, or estimating the size of the dot that can be formed.

The number, sizes, or shapes of the dots in the printed matter can be confirmed by magnifying and observing the printed matter using a microscope and the like. Accordingly, it is possible to configure data in which the information about the dots of the printed matter, and the printing condition information and the plate-making condition information for the printed matter are associated with each other. The printing plate has projections and depressions corresponding to the dots, and in that data, by causing a piece of data in which the dot is observed and a piece of data in which the dot is not observed by microscopic observation on the printed matter to be data for learning, it is possible to create a model for determining whether the dot can be formed based on the plate-making condition information and the printing condition information. For example, when determination is made based on the plate-making condition information and the printing condition information, it may be determined that the dot can be formed if the size of the dot to be formed is not 0. Furthermore, it may be determined that the dot can be formed if the size of the dot output from a prediction model (described later) corresponding to an input value satisfies a predetermined condition. For example, the prediction unit may determine that the dot can be formed if the size of the dot output from the prediction model corresponding to the input value exceeds a threshold (for example, 0).

The printing plate has projections and depressions corresponding to the dots, and by causing, in the data, a piece of data in which the dot is observed by microscopic observation on the printed matter to be data for learning, it is possible to create a model for estimating the size of the dot that can be formed.

The printing quality information, especially indexes of printing quality at the solid part, the shadow part, and the halftone part, may include evaluation about color density such as ink density, a Ink coverage predicted value, an ink usage predicted value, and a predicted minimum readable font size.

Herein, the "Ink coverage" indicates uniformity of the ink transferred onto the printing base material. Specifically, the uniformity can be evaluated by using, as an index, a coefficient of variation of luminance in a predetermined direction at the halftone part, the shadow part, or the solid part (described later) formed on the printed matter by test printing. At the halftone part constituted of dots, a little variation of luminance is estimated depending on presence/absence of the dots. In other words, it can be said that the halftone part, the shadow part, or the solid part with higher uniformity is formed as the coefficient of variation is smaller. The Ink coverage may be evaluated at the highlighted part.

The Ink coverage predicted value is a predicted value of the Ink coverage of the ink transferred onto the printing base material, and means a predicted value of the Ink coverage that is estimated based on the printing condition information and the plate-making condition information. The luminance of the printed matter and the coefficient of variation thereof can be confirmed by measuring the halftone part, the shadow part, or the solid part of the printed matter with a luminance meter, or converting scan data of the halftone part or the shadow part of the printed matter into gray-scale data and outputting a luminance value by image processing. Accordingly, it is possible to configure data in which the information about the luminance of the printed matter, and the printing condition information and the plate-making condition information about the printed matter are associated with each other. By causing this data to be data for learning, it is possible to create a model for estimating the luminance value based on the plate-making condition information and the printing condition information.

Herein, the ink usage predicted value may be ink usage required for obtaining predetermined ink density or a predetermined Ink coverage. By considering the ink usage, it is possible to obtain the plate-making condition and the printing condition that can achieve both of printing quality and economic efficiency.

Herein, the predicted minimum readable font size indicates a predicted value of a minimum character point that can be read by a person when being recorded under a predetermined plate-making condition and printing condition. Herein, the character point is a unit representing a size of a character or a figure. A unit basis of the character point is not particularly limited, but may be a DTP point, for example. As the predicted minimum readable font size is smaller, characters other than the minimum character point can be printed more smoothly and clearly, and the printing quality can be further improved.

The printing quality information may also include printing quality at the solid part. The index of the printing quality at the solid part is not particularly limited, but may include the ink density, the Ink coverage, and the ink usage, for example. The printing quality at the solid part may be considered as a quality index of the color density or the Ink coverage. By considering the ink usage, it is possible to obtain the plate-making condition and the printing condition that can achieve both of printing quality and economic efficiency.

The printing quality information may include printing quality at a character/thin-line part. The index of the printing quality at the character/thin-line part is not particularly limited, but may include readability and the Ink coverage, for example.

Herein, the "readability" indicates a character size of a minimum point satisfying uniformity of the ink transferred onto the printing base material. Specifically, for a sample on which characters having different sizes are printed, a coefficient of variation of luminance is calculated for a line constituting each character. If the coefficient of variation of luminance satisfies a predetermined condition, it may be evaluated that the uniformity is satisfied. For example, when the coefficient of variation of luminance is smaller than a threshold, it may be evaluated that the uniformity is satisfied. The readability can then be evaluated using the character size of the minimum point satisfying the uniformity as an index.

As described above, the luminance of the printed matter and the coefficient of variation thereof can be confirmed by measuring character portions having different sizes in the printed matter with a luminance meter, or converting scan data of the halftone part, the shadow part, or the solid part of the printed matter into gray-scale data and outputting a luminance value by image processing. Accordingly, it is possible to configure data in which the information about the luminance of the character portions having different sizes in the printed matter, and the printing condition information and the plate-making condition information about the printed matter are associated with each other. By causing this data to be data for learning, it is possible to create a model for estimating the character size of the minimum point satisfying predetermined uniformity, that is, the readability, based on the plate-making condition information and the printing condition information.

At the time of learning, part of the data may be converted into a dummy variable and the like to be subjected to machine learning. For example, if there are options of PET and OPP as a material of the printing base material, variables such as "printing base material: PET" and "printing base material: OPP" may be set as dummy variables, and the former may be set to be 0 and the latter may be set to be 1 to represent that OPP is used as the printing base material. Due to this, by converting data classified by a category instead of a numerical value into a numerical value, the model may be enabled to treat category-type data.

Particularly, the prediction unit 111 preferably predicts the printing quality information including, as the printing quality, at least one of the number, sizes, or shapes of the dots in the printed matter at a predetermined gradation part, especially the highlighted part, based on the printing condition information and the plate-making condition information including information about the correction curve as the condition for manufacturing the flexographic printing plate from the flexographic printing original plate. As described above, it has been conventionally difficult to discriminate among Figure 3B to Figure 3D with only the index of the ink density, and the ink density of the solid part cannot be easily compatible with the printing quality of the highlighted part. For example, a trade-off may be caused between the ink density and the printing quality of the highlighted part such that fading tends to be disturbed when the ink density is increased, and printed matter with beautiful fading tends to be obtained when the ink density is low. On the other hand, through the processing performed by the prediction unit 111 described above, with the assistance device of the present embodiment, a condition for achieving beautiful fading as illustrated in Figure 3B can be found by considering the number, sizes, shapes, and the like of the dots.

The prediction unit 111 preferably predicts the printing quality information including the Ink coverage predicted value as the printing quality based on the printing condition information and the plate-making condition information including information about the type of the microcell as the condition for manufacturing the flexographic printing plate from the flexographic printing original plate. Due to this, for example, if a primary coating (white ink) is seen through at the time of film printing (back printing), a color tone and vividness of the printed matter become insufficient, and also in color portions, the color tone and vividness of the printed matter become insufficient. There are a high Ink coverage and a low Ink coverage even with the same ink density, so that it is difficult to discriminate the Ink coverage only with the ink density. On the other hand, through the processing performed by the prediction unit 111 described above, the assistance device of the present embodiment can predict the printing quality information including the Ink coverage predicted value as the printing quality.

As illustrated in Figure 2B, the prediction unit 111 may associate the output printing quality information with the plate-making condition information and the printing condition information to be recorded in the print data 151. Figure 2B illustrates an aspect of recording information about predicted printing quality corresponding to assumed plate-making condition information and printing condition information.

The recommendation unit 112 outputs recommended condition information indicating a recommended condition for the plate-making condition or the printing condition based on the printing quality information and target quality information indicating the target index related to the printing quality. Herein, the target quality information is not particularly limited, but may include, for example, design image information to be printed on the printing base material, color profile information, or information about screen information. Such information is not particularly limited, but may include, for example, maximum ink density, minimum ink density, gradation, and a Ink coverage.

By way of example, when the prediction unit 111 predicts a plurality of pieces of the printing quality information for a plurality of combinations of the plate-making condition information and the printing condition information, the recommendation unit 112 may output, as the recommended condition information, any of the pieces of printing quality information satisfying the target quality information. At this point, the recommendation unit 112 may output, as the recommended condition information, any of the pieces of printing quality information that is excellent from a viewpoint of the target quality information.

As illustrated in Figure 2B, the recommendation unit 112 may record the output recommended condition information in the print data 151.

The target value output unit 113 may output the target quality information based on the design image information. Herein, the design image information may be digital data of an image to be printed on the printing base material. The target value output unit 113 may specify, based on the design image information, the ink density, the minimum ink density, the Ink coverage, and the like suitable for printing it, and may output them as the target quality information.

The target value output unit 113 may also extract an element for evaluating the printing quality at the highlighted part. Specifically, the target value output unit 113 may extract a portion to be the element for evaluating the printing quality at the highlighted part from among the screen image parameters. Specifically, the target value output unit 113 may extract, from among the screen image parameters, the number of the dots, the size of the dot, and the long/short ratio of the dot in a 10% dot region, for example, as elements for evaluating the printing quality at the highlighted part, and may output the extracted elements for evaluating the printing quality at the highlighted part as the target quality information described above. The target quality information output in this way may be used by the recommendation unit 112 as a target value of a gradation property.

The target value output unit 113 may extract the element for evaluating the printing quality at the highlighted part based on the color profile information and the screen information instead of the screen image parameters. The target quality information output in this way may be used by the recommendation unit 112 as a target value of a gradation property.

As illustrated in Figure 2B, the target value output unit 113 may record the output target quality information in the print data 151.

The condition generation unit 114 may generate the plate-making condition information and the printing condition information used as an input for the prediction unit 111. For example, in a case in which the printing quality information output from the prediction unit 111 does not satisfy the target quality information, and the recommendation unit 112 cannot output the recommended condition information, the condition generation unit 114 may newly generate the plate-making condition information and the printing condition information.

The prediction unit 111 may output the printing quality information again based on the plate-making condition information and the printing condition information that are newly generated by the condition generation unit 114. In this case, the prediction unit 111 may associate the newly generated plate-making condition information and printing condition information with the printing quality information that is predicted based thereon to be recorded in the print data 151.

The learning unit 115 may create a model based on data for learning (refer to Figure 2C) obtained by associating with each other the plate-making condition for the printing plate, the printing condition for the printed matter using the printing plate manufactured under the plate-making condition, and the printing quality indicating the index of the printing quality in gradation of the printed matter. The prediction unit 111 may output the printing quality information based on the plate-making condition information and the printing condition information using the model created by the learning unit 115.

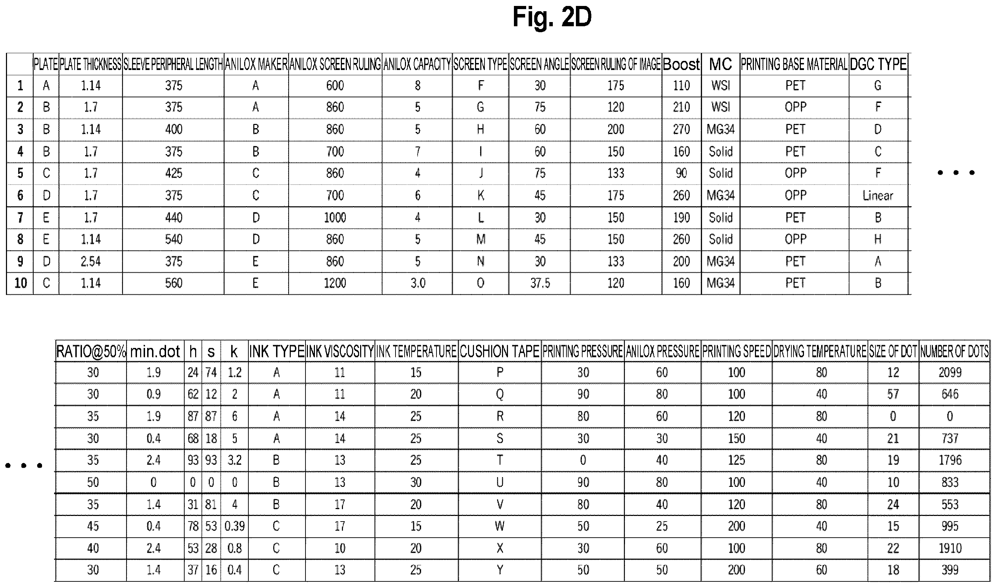

Figure 2D illustrates a specific example of the print data obtained by associating with each other the plate-making condition for the printing plate, the printing condition for the printed matter using the printing plate manufactured under the plate-making condition, and the printing quality indicating the index of the printing quality in gradation of the printed matter. The print data illustrated in Figure 2D may be used as the data for learning. A left column in Figure 2D indicates a printing ID, and the plate-making condition for the printing plate, the printing condition for the printed matter using the printing plate manufactured under the plate-making condition, and the printing quality indicating the index of the printing quality in gradation of the printed matter are recorded in association with each other, for each printing ID.

Figure 2D illustrates printing results of 10 examples due to space restrictions, but data of 300 examples is used in the present embodiment. The print data or the data for learning to be used is not limited thereto, and the number of pieces thereof may be more extensive.

In Figure 2D, each abbreviation means the following. "Midpoint", "Slope at midpoint", "Minimum Dot", "highlight shape", "shadow shape", and "Keep 0% to" are incorporated in the present embodiment with reference to US 11,575,806 B2.

- MC: means a type of a microcell. The microcell means a portion in which a transferring property of the ink is increased by making a fine pattern that does not affect a design on a surface to form projections and depressions.

- ratio@50%: indicates "Midpoint".

- DGC type: indicates "Slope at midpoint".

- min.dot: indicates "Minimum Dot".

- h: indicates "highlight shape".

- s: indicates "shadow shape".

- k: indicates "Keep 0% to".

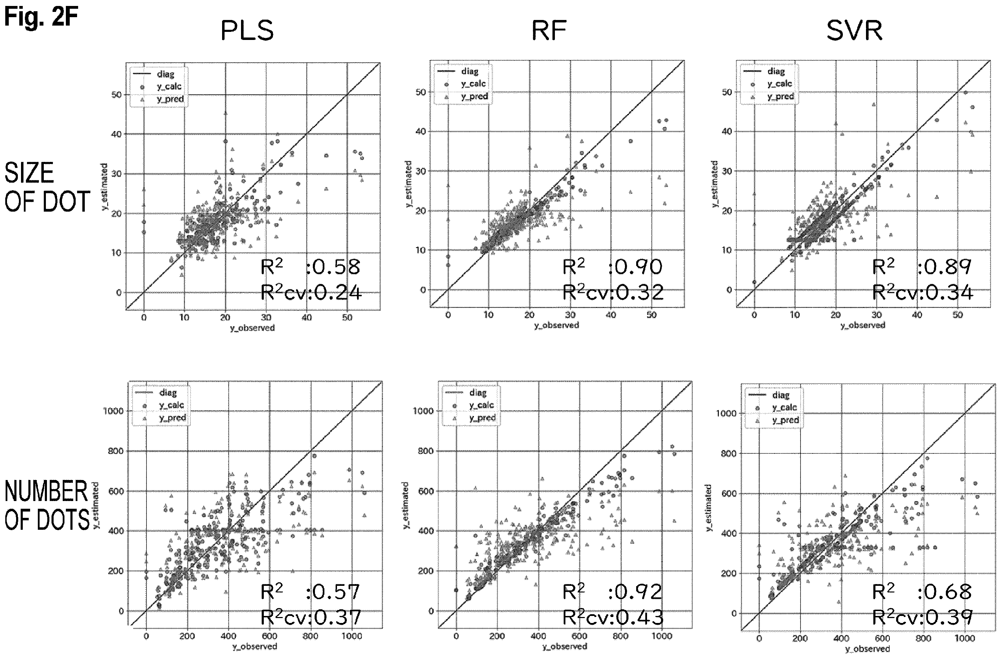

A prediction model illustrated in Figure 2E is created by using the data as illustrated in Figure 2D as the data for learning, and a result of evaluating prediction accuracy thereof is illustrated in Figure 2F. In creating the prediction model, the data for learning including 300 pieces of data as illustrated in Figure 2D was prepared. This data for learning included the number and sizes of dots actually printed mainly at the highlighted part as the printing quality information. The prediction model was constructed by three methods including Partial Least Squares (PLS), Support Vector Regression (SVR), and Random Forests (RF), using the data for learning. For constructing each prediction model, a hyperparameter maximizing generalization performance was selected and used. Specifically, as an index of the generalization performance of the model, used was a determination coefficient $R2$ that was calculated based on a predicted value obtained by performing 5-fold cross-validation (described later). For a model obtained by using all combinations of possible values of respective hyperparameters, $R2$ described above was calculated, and a hyperparameter with which a value of $R2$ became maximum was employed.

Prediction accuracy by each prediction model was evaluated by the determination coefficient $R2$. Specifically, in the 5-fold cross-validation, the data for learning was divided into five pieces, four of them were used as data for constructing a model, and a regression model was constructed by each of the models described above. The rest one of the pieces of data for learning was used, as validation data, for evaluating prediction performance of the constructed regression model. There were five ways to select the data for constructing a model, and by predicting each piece of the validation data by each model, all pieces of training data were regarded as "external data not used for constructing the model" to obtain a prediction result. Due to this, five $R2$ values were obtained, and an average value thereof was assumed to be an $R2CV$ value. A final model was constructed by using all pieces of the training data and the determined hyperparameter.

A result thereof is illustrated in Figure 2F. Due to this, it was found that the number and sizes of the dots at the highlighted part was able to be sufficiently predicted.

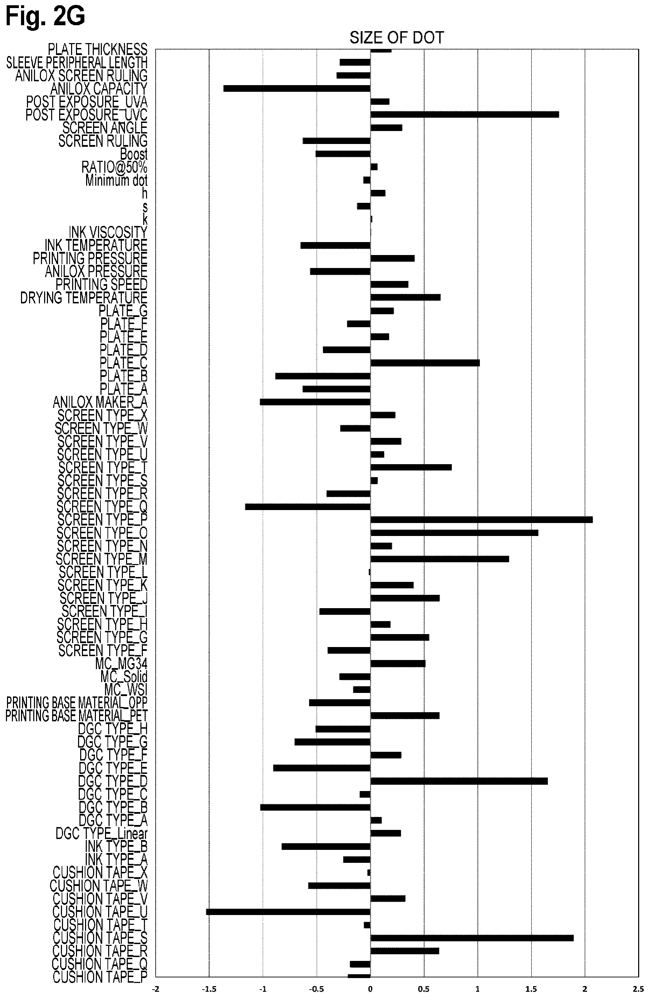

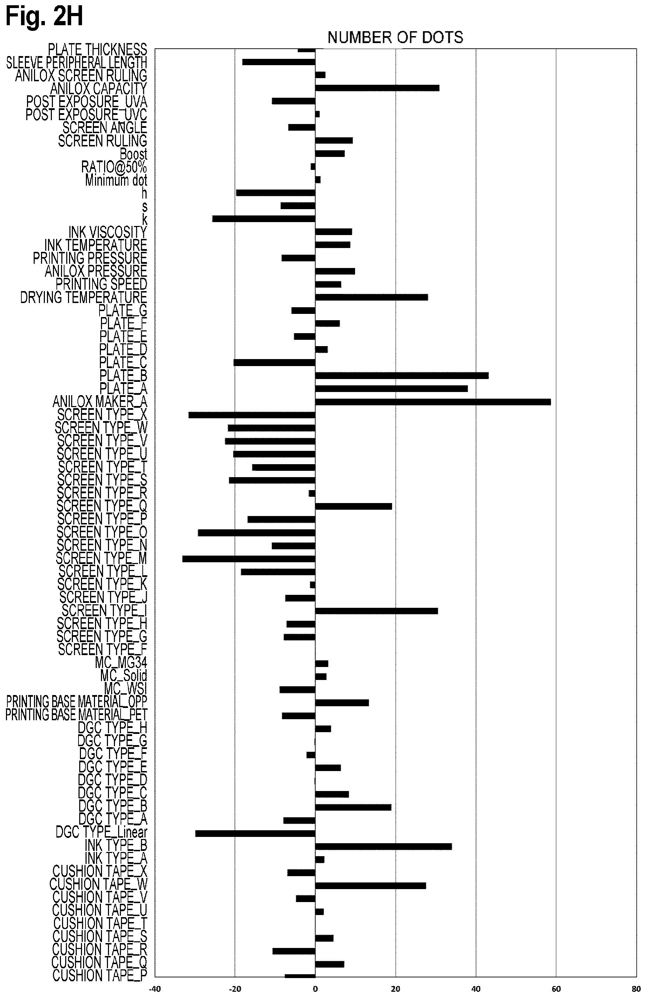

Additionally, Figure 2G and Figure 2H illustrate lists of explanatory variables having high importance in the model described above. As illustrated in Figure 2G, in determination of the size of the dot, examples of the explanatory variable having high importance included a cushion tape type, a screen type, a plate type/thickness, an anilox type, a printing speed, a printing pressure, an ink type, ink temperature/viscosity, k, h, min dot, a Boost value, and screen ruling of the image. As illustrated in Figure 2H, in determination of the number of the dots, examples of the explanatory variable having high importance included a screen type, a plate type/thickness, k, h, min dot, a DGC type, and screen ruling of the image.

As illustrated in Figure 2F to Figure 2H, it has been found that it is possible to construct the prediction unit 111 for predicting the printing quality information indicating printing quality in predetermined gradation of the printed matter based on the plate-making condition information indicating the plate-making condition for the printing plate and the printing condition information indicating the printing condition for obtaining the printed matter using the printing plate manufactured under the plate-making condition. It has been demonstrated that the prediction unit 111 has predetermined accuracy, and can grasp the appropriate plate-making condition and printing condition without performing the printing step. It has been also found that it is unnecessary to directly predict a deformation phenomenon of projections and depressions on the printing base material in the prediction, and determination is made while considering the deformation phenomenon of the projections and depressions on the printing base material by considering the plate-making condition information that affects the shape, hardness, and the like of the printing plate, and the printing condition information that affects the ink amount, pressing intensity, and the like, so that it is possible to predict the printing quality such as the size, the shape, and the Ink coverage of the dot after printing.

The specific examples illustrated in Figure 2F to Figure 2H are merely examples for indicating technical significance of the assistance device of the present embodiment, and the present embodiment is not limited to the specific examples in Figure 2F to Figure 2H.

3.2. Operation processing

Next, the following describes an operation of the assistance device 100. Figure 4A is a flowchart illustrating an example of processing performed by the assistance device 100. The processing performed by the assistance device 100 is not limited to Figure 4A.

In step S1, the target value output unit 113 may receive the design image information, the screen image parameter, the color profile information, or the screen information, and output target quality information D based on the received design image information and the like.

In step S2, the condition generation unit 114 may generate plate-making condition information An indicating the plate-making condition for the printing plate, and printing condition information Bn indicating the printing condition for the printed matter using the printing plate under the plate-making condition.

In step S3, the prediction unit 111 may output printing quality information Cn indicating printing quality in predetermined gradation of the printed matter based on the plate-making condition information An and the printing condition information Bn generated by the condition generation unit 114. At this point, the prediction unit 111 may use the pre-learned model described above.

In step S4, the recommendation unit 112 determines whether the printing quality information Cn satisfies the target quality information indicating the target index related to the printing quality. In this determination, the recommendation unit 112 may use a square of a difference between the target quality information D and the printing quality information Cn, for example. The recommendation unit 112 may then end searching, for example, when the square of the difference between the target quality information D and the printing quality information Cn is smaller than a threshold designated in advance, or when the number of times of preparation of plate-making condition information An+1 and printing condition information Bn+1 by the condition generation unit 114 (described later) is larger than a value designated in advance.

When the recommendation unit 112 determines that the printing quality information Cn satisfies the target quality information indicating the target index related to the printing quality in step S4, the recommendation unit 112 may output recommended condition information Fn indicating the recommended condition for the plate-making condition or the printing condition in step S5. Herein, the recommended condition information Fn includes, as the recommended condition, the plate-making condition information An and the printing condition information Bn corresponding to the printing quality information Cn.

When the recommendation unit 112 determines that the printing quality information Cn does not satisfy the target quality information indicating the target index related to the printing quality in step S4, the condition generation unit 114 generates the plate-making condition information An+1 and the printing condition information Bn+1 different from the plate-making condition information An and the printing condition information Bn in step S6. At this point, the condition generation unit 114 may determine the plate-making condition information An+1 and the printing condition information Bn+1 to reduce the square of the difference between the target quality information D and the printing quality information Cn. Furthermore, in a case of causing a plurality of pieces of the printing quality information Cn to be closer to a target value at the same time, the plate-making condition information An+1 and the printing condition information Bn+1 may be determined to reduce a sum total of squares of the difference between each printing quality information target value and each printing quality information predicted value, for example. Based on the generated plate-making condition information An+1 and printing condition information Bn+1, steps S4 to S5 are performed again.

In step S6, the condition generation unit 114 may create the plate-making condition information An+1 and the printing condition information Bn+1 using an existing condition search algorithm based on a gradient of an error from a target such as a gradient descent method, Stochastic Gradient Descent, AdaGrad, RMSProp, and Adam, for example.

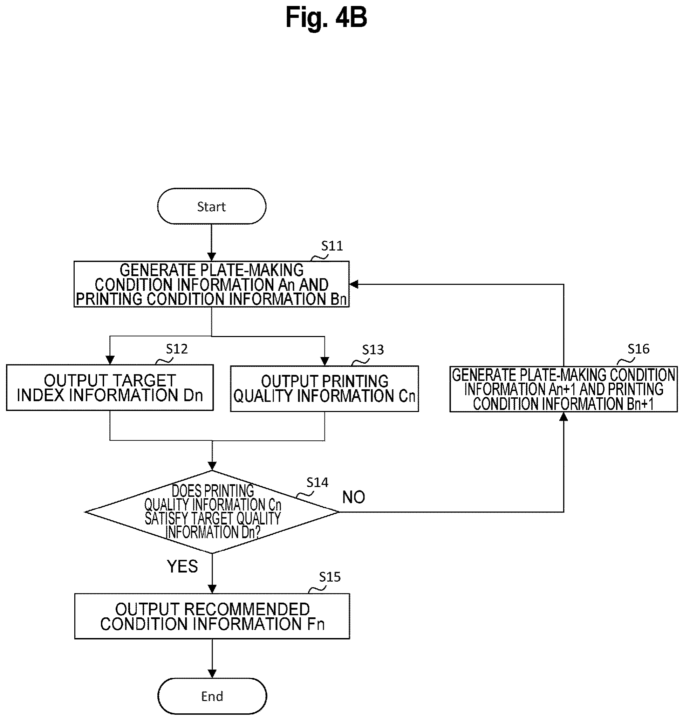

Figure 4B illustrates another example of the processing performed by the assistance device 100.

In step S11, the condition generation unit 114 may generate the plate-making condition information An indicating the plate-making condition for the printing plate, and the printing condition information Bn indicating the printing condition for the printed matter using the printing plate manufactured under the plate-making condition.

In step S12, the target value output unit 113 may receive the screen image parameter, the color profile information, or the screen information that is estimated based on the design image data, the plate-making condition information An, and the printing condition information Bn, and output target quality information Dn based on the received screen image parameter and the like. For example, the target value output unit 113 may output a dot size at the highlighted part as the target quality information Dn based on the screen image parameter. The target value output unit 113 may also output an ink density maximum value as the target quality information Dn based on the design image data.

In step S13, the prediction unit 111 may output the printing quality information Cn indicating printing quality in predetermined gradation of the printed matter based on the plate-making condition information An and the printing condition information Bn generated by the condition generation unit 114. At this point, the prediction unit 111 may use the pre-learned model described above.

In step S14, the recommendation unit 112 determines whether the printing quality information Cn satisfies the target quality information indicating the target index related to the printing quality. In this determination, the recommendation unit 112 may use a square of a difference between the target quality information Dn and the printing quality information Cn, for example. The recommendation unit 112 may then end searching, for example, when the square of the difference between the target quality information Dn and the printing quality information Cn is smaller than a threshold designated in advance, or when the number of times of preparation of the plate-making condition information An+1 and the printing condition information Bn+1 by the condition generation unit 114 (described later) is larger than a value designated in advance.

When the recommendation unit 112 determines that the printing quality information Cn satisfies the target quality information indicating the target index related to the printing quality in step S14, the recommendation unit 112 may output recommended condition information Fn indicating the recommended condition for the plate-making condition or the printing condition in step S15. Herein, the recommended condition information Fn includes, as the recommended condition, the plate-making condition information An and the printing condition information Bn corresponding to the printing quality information Cn.

When the recommendation unit 112 determines that the printing quality information Cn does not satisfy the target quality information indicating the target index related to the printing quality in step S14, the condition generation unit 114 generates the plate-making condition information An+1 and the printing condition information Bn+1 different from the plate-making condition information An and the printing condition information Bn in step S16. At this point, the condition generation unit 114 may determine the plate-making condition information An+1 and the printing condition information Bn+1 to reduce the square of the difference between the target quality information Dn and the printing quality information Cn. Furthermore, in a case of causing a plurality of pieces of the printing quality information Cn to be closer to a target value at the same time, the plate-making condition information An+1 and the printing condition information Bn+1 may be determined to reduce a sum total of squares of the difference between each printing quality information target value and each printing quality information predicted value, for example. Based on the generated plate-making condition information An+1 and printing condition information Bn+1, steps S11 to S14 are performed again.

In step S16, the condition generation unit 114 may create the plate-making condition information An+1 and the printing condition information Bn+1 using an existing condition search algorithm based on a gradient of an error from a target such as a gradient descent method, Stochastic Gradient Descent, AdaGrad, RMSProp, and Adam, for example.

In the processing performed by the assistance device 100 as illustrated in Figure 4A and Figure 4B, optimization processing may be performed to search for a more suitable condition. For the optimization processing, an optimization method for solving a combination optimization problem can be used, but the method is not particularly limited. An existing optimization method such as simulated annealing or a multipurpose genetic algorithm may be used, for example.

4. Method

In the method of the present embodiment, the assistance device performs: a prediction step of outputting the printing quality information indicating the printing quality in predetermined gradation of the printed matter based on the plate-making condition information indicating the plate-making condition for the printing plate and the printing condition information indicating the printing condition for obtaining the printed matter using the printing plate manufactured under the plate-making condition; and a recommendation step of outputting the recommended condition information indicating the recommended condition for the plate-making condition or the printing condition based on the printing quality information and the target quality information indicating the target index related to the printing quality.

Specific aspects of the method in the present embodiment are described in the above operation processing, so that detailed description thereof will not be repeated herein.

5. Program

The program of the present embodiment causes the assistance device to perform: a prediction step of outputting the printing quality information indicating the printing quality in predetermined gradation of the printed matter based on the plate-making condition information indicating the plate-making condition for the printing plate and the printing condition information indicating the printing condition for obtaining the printed matter using the printing plate manufactured under the plate-making condition; and a recommendation step of outputting the recommended condition information indicating the recommended condition for the plate-making condition or the printing condition based on the printing quality information and the target quality information indicating the target index related to the printing quality.

The program may be recorded in a readable recording medium. Specific aspects of the processing performed by the program of the present embodiment are described in the above operation processing, so that detailed description thereof will not be repeated herein.

**Industrial Applicability**

The present invention has industrial applicability as a device that supports formulation of a plate-making condition and a printing condition in flexographic printing.

**Reference Signs List**

100    assistance device

110    processor

111    prediction unit

112     recommendation unit

113     target value output unit

114     condition generation unit

115     learning unit

120     communication interface

130     input/output interface

131     display device

140     memory

150     storage

151     print data

152     data for learning

160     bus

200     plate-making device

300     printing device

## Claims

1.  A assistance device comprising:

    a prediction unit that predicts printing quality information indicating printing quality in predetermined gradation of printed matter based on plate-making condition information indicating a plate-making condition for a printing plate and printing condition information indicating a printing condition for obtaining the printed matter using the printing plate manufactured under the plate-making condition; and
    a recommendation unit that outputs recommended condition information indicating a recommended condition for the plate-making condition or the printing condition based on the printing quality information and target quality information indicating a target index related to the printing quality.

2.  The assistance device according to claim 1, wherein the plate-making condition information includes a condition for manufacturing a flexographic printing plate from a flexographic printing original plate.

3.  The assistance device according to claim 1, wherein the printing condition information includes at least one of a printing machine condition, an anilox condition, an ink condition, a printing base material condition, and a cushion tape condition.

4.  The assistance device according to claim 1, wherein the printing quality information includes at least one of pieces of information about ink density, a Ink coverage predicted value, an ink usage predicted value, and a predicted minimum readable font size.

5.  The assistance device according to claim 1, wherein the printing quality information includes a print curve or at least one of the number, sizes, or shapes of dots in the printed matter at a predetermined gradation part.

6.  The assistance device according to claim 1, further comprising:
    a target value output unit that outputs the target quality information based on design image information.

7.  The assistance device according to claim 1, further comprising:

a learning unit that creates a model based on data for learning obtained by associating with each other the plate-making condition for the printing plate, the printing condition for the printed matter using the printing plate manufactured under the plate-making condition, and printing quality indicating an index of printing quality in gradation of the printed matter.

8. An information processing method performed by a assistance device, the method comprising:

a prediction step of outputting printing quality information indicating printing quality in predetermined gradation of printed matter based on plate-making condition information indicating a plate-making condition for a printing plate and printing condition information indicating a printing condition for obtaining the printed matter using the printing plate manufactured under the plate-making condition; and
a recommendation step of outputting recommended condition information indicating a recommended condition for the plate-making condition or the printing condition based on the printing quality information and target quality information indicating a target index related to the printing quality.

9. A program that causes a assistance device to perform:

a prediction step of outputting printing quality information indicating printing quality in predetermined gradation of printed matter based on plate-making condition information indicating a plate-making condition for a printing plate and printing condition information indicating a printing condition for obtaining the printed matter using the printing plate manufactured under the plate-making condition; and
a recommendation step of outputting recommended condition information indicating a recommended condition for the plate-making condition or the printing condition based on the printing quality information and target quality information indicating a target index related to the printing quality.

# Fig. 1

# Fig. 2A

```
                                                            100

  ┌──────────────────────────────────────────────────────────────────────┐
  │                                                                        │
  │                     120                              110               │
  │  ┌──────────────────────────┐  │   ┌────────────────────────────────┐ │
  │  │ COMMUNICATION INTERFACE  │──┤   │          PROCESSOR             │ │
  │  └──────────────────────────┘  │   │  ┌──────────────────────────┐  │ │
  │                     130        │   │  │     PREDICTION UNIT      │──┼──111
  │  ┌──────────────────────────┐  │   │  ├──────────────────────────┤  │ │
  │  │  INPUT/OUTPUT INTERFACE  │  │   │  │     RECOMMENDATION       │──┼──112
  │  │  ┌────────────────────┐  │──┤   │  │         UNIT             │  │ │
  │  │  │   DISPLAY DEVICE   │──┼──131 │  ├──────────────────────────┤  │ │
  │  │  └────────────────────┘  │  │   │  │     TARGET VALUE         │──┼──113
  │  └──────────────────────────┘  │   │  │     OUTPUT UNIT          │  │ │
  │                                │   │  ├──────────────────────────┤  │ │
  │                                │   │  │      CONDITION           │──┼──114
  │                                │   │  │   GENERATION UNIT        │  │ │
  │                                │   │  ├──────────────────────────┤  │ │
  │                     150        │   │  │     LEARNING UNIT        │──┼──115
  │  ┌──────────────────────────┐  │   │  ├──────────────────────────┤  │ │
  │  │        STORAGE           │  │   │  │    DOT FORMATION         │──┼──116
  │  │  ┌────────────────────┐  │  │   │  │ DETERMINATION UNIT       │  │ │
  │  │  │     PRINT DATA     │──┼──151 │  └──────────────────────────┘  │ │
  │  │  ├────────────────────┤  │──┤   └────────────────────────────────┘ │
  │  │  │  DATA FOR LEARNING │──┼──152                                     │
  │  │  └────────────────────┘  │  │                              140      │
  │  └──────────────────────────┘  │   ┌────────────────────────────────┐ │
  │                                │   │            MEMORY              │ │
  │                                └───┴────────────────────────────────┘ │
  │                              160                                       │
  └──────────────────────────────────────────────────────────────────────┘
```

# Fig. 2B

151

| PRINT ID |
|---|
| IMAGE INFORMATION,<br>COLOR PROFILE INFORMATION,<br>SCREEN CONDITION |
| INFORMATION ABOUT PRINTING QUALITY<br>CORRESPONDING TO ASSUMED<br>PLATE-MAKING CONDITION INFORMATION<br>AND PRINTING CONDITION INFORMATION |
| TARGET INDEX INFORMATION |
| RECOMMENDED CONDITION INFORMATION<br>(RECOMMENDED CONDITION FOR PLATE-MAKING<br>CONDITION AND PRINTING CONDITION) |
| INFORMATION ABOUT EXECUTED<br>PRINTING CONDITION |
| INFORMATION ABOUT EXECUTED<br>PLATE-MAKING CONDITION |
| INFORMATION ABOUT ACTUAL PRINTING QUALITY |
| ... |

# Fig. 2C

| |
|---|
| ID FOR LEARNING |
| IMAGE INFORMATION,<br>COLOR PROFILE INFORMATION,<br>SCRE EN CONDITION |
| INFORMATION ABOUT EXECUTED<br>PRINTING CONDITION |
| INFORMATION ABOUT EXECUTED<br>PLATE-MAKING CONDITION |
| INFORMATION ABOUT ACTUAL PRINTING QUALITY |
| ... |

152

# Fig. 2D

| | PLATE | PLATE THICKNESS | SLEEVE PERIPHERAL LENGTH | ANILOX MAKER | ANILOX SCREEN RULING | ANILOX CAPACITY | SCREEN TYPE | SCREEN ANGLE | SCREEN RULING OF IMAGE | Boost | MC | PRINTING BASE MATERIAL | DGC TYPE | |
|---|---|---|---|---|---|---|---|---|---|---|---|---|---|---|
| 1 | A | 1.14 | 375 | A | 600 | 8 | F | 30 | 175 | 110 | WSI | PET | G | |
| 2 | B | 1.7 | 375 | A | 860 | 5 | G | 75 | 120 | 210 | WSI | OPP | F | |
| 3 | B | 1.14 | 400 | B | 860 | 5 | H | 60 | 200 | 270 | MG34 | PET | D | |
| 4 | B | 1.7 | 375 | B | 700 | 7 | I | 60 | 150 | 160 | Solid | PET | C | |
| 5 | C | 1.7 | 425 | C | 860 | 4 | J | 75 | 133 | 90 | Solid | OPP | F | • • • |
| 6 | D | 1.7 | 375 | C | 700 | 6 | K | 45 | 175 | 260 | MG34 | OPP | Linear | |
| 7 | E | 1.7 | 440 | D | 1000 | 4 | L | 30 | 150 | 190 | Solid | PET | B | |
| 8 | E | 1.14 | 540 | D | 860 | 5 | M | 45 | 150 | 260 | Solid | OPP | H | |
| 9 | D | 2.54 | 375 | E | 860 | 5 | N | 30 | 133 | 200 | MG34 | PET | A | |
| 10 | C | 1.14 | 560 | E | 1200 | 3.0 | O | 37.5 | 120 | 160 | MG34 | PET | B | |

| | RATIO@50% | min.dot | h | s | k | INK TYPE | INK VISCOSITY | INK TEMPERATURE | CUSHION TAPE | PRINTING PRESSURE | ANILOX PRESSURE | PRINTING SPEED | DRYING TEMPERATURE | SIZE OF DOT | NUMBER OF DOTS |
|---|---|---|---|---|---|---|---|---|---|---|---|---|---|---|---|
| | 30 | 1.9 | 24 | 74 | 1.2 | A | 11 | 15 | P | 30 | 60 | 100 | 80 | 12 | 2099 |
| | 30 | 0.9 | 62 | 12 | 2 | A | 11 | 20 | Q | 90 | 80 | 100 | 40 | 57 | 646 |
| | 35 | 1.9 | 87 | 87 | 6 | A | 14 | 25 | R | 80 | 60 | 120 | 80 | 0 | 0 |
| | 30 | 0.4 | 68 | 18 | 5 | A | 14 | 25 | S | 30 | 30 | 150 | 40 | 21 | 737 |
| | 35 | 2.4 | 93 | 93 | 3.2 | B | 13 | 25 | T | 0 | 40 | 125 | 80 | 19 | 1796 |
| | 50 | 0 | 0 | 0 | 0 | B | 13 | 30 | U | 90 | 80 | 100 | 40 | 10 | 833 |
| | 35 | 1.4 | 31 | 81 | 4 | B | 17 | 20 | V | 80 | 40 | 120 | 80 | 24 | 553 |
| | 45 | 0.4 | 78 | 53 | 0.39 | C | 17 | 15 | W | 50 | 25 | 200 | 40 | 15 | 995 |
| | 40 | 2.4 | 53 | 28 | 0.8 | C | 10 | 20 | X | 30 | 60 | 100 | 80 | 22 | 1910 |
| | 30 | 1.4 | 37 | 16 | 0.4 | C | 13 | 25 | Y | 50 | 50 | 200 | 60 | 18 | 399 |

EP 4 693 015 A1

# Fig. 2E

```
┌─────────────────────────┐
│ PLATE-MAKING CONDITION  │───┐
│      INFORMATION        │   │
└─────────────────────────┘   │    ┌──────────────┐      ┌──────────────────────┐
                              ├──→ │ PRE-LEARNED  │───→  │  PRINTING QUALITY    │
┌─────────────────────────┐   │    │    MODEL     │      │     INFORMATION      │
│   PRINTING CONDITION    │───┘    └──────────────┘      └──────────────────────┘
│      INFORMATION        │
└─────────────────────────┘
```

Fig. 2F

# Fig. 2G

SIZE OF DOT

PLATE THICKNESS
SLEEVE PERIPHERAL LENGTH
ANILOX SCREEN RULING
ANILOX CAPACITY
POST EXPOSURE_UVA
POST EXPOSURE_UVC
SCREEN ANGLE
SCREEN RULING
Boost
RATIO@50%
Minimum dot
h
s
k
INK VISCOSITY
INK TEMPERATURE
PRINTING PRESSURE
ANILOX PRESSURE
PRINTING SPEED
DRYING TEMPERATURE
PLATE_G
PLATE_F
PLATE_E
PLATE_D
PLATE_C
PLATE_B
PLATE_A
ANILOX MAKER_A
SCREEN TYPE_X
SCREEN TYPE_W
SCREEN TYPE_V
SCREEN TYPE_U
SCREEN TYPE_T
SCREEN TYPE_S
SCREEN TYPE_R
SCREEN TYPE_Q
SCREEN TYPE_P
SCREEN TYPE_O
SCREEN TYPE_N
SCREEN TYPE_M
SCREEN TYPE_L
SCREEN TYPE_K
SCREEN TYPE_J
SCREEN TYPE_I
SCREEN TYPE_H
SCREEN TYPE_G
SCREEN TYPE_F
MC_MG34
MC_Solid
MC_WSI
PRINTING BASE MATERIAL_OPP
PRINTING BASE MATERIAL_PET
DGC TYPE_H
DGC TYPE_G
DGC TYPE_F
DGC TYPE_E
DGC TYPE_D
DGC TYPE_C
DGC TYPE_B
DGC TYPE_A
DGC TYPE_Linear
INK TYPE_B
INK TYPE_A
CUSHION TAPE_X
CUSHION TAPE_W
CUSHION TAPE_V
CUSHION TAPE_U
CUSHION TAPE_T
CUSHION TAPE_S
CUSHION TAPE_R
CUSHION TAPE_Q
CUSHION TAPE_P

-2    -1.5    -1    -0.5    0    0.5    1    1.5    2    2.5

## Fig. 2H

NUMBER OF DOTS

# Fig. 3A

# Fig. 3B

BEAUTIFUL FADING

# Fig. 3C

# Fig. 3D

TONE REVERSAL

DATA DOT
(%)

# Fig. 4A

```
        ┌──────────────┐
        │    Start      │
        └──────┬───────┘
               │
               ▼                          S1
   ┌───────────────────────────┐
   │    OUTPUT TARGET           │
   │   INDEX INFORMATION D      │
   └───────────┬───────────────┘
               │
               ▼                          S2
   ┌───────────────────────────┐
   │   GENERATE PLATE-MAKING    │
   │  CONDITION INFORMATION An AND │
   │ PRINTING CONDITION INFORMATION Bn │
   └───────────┬───────────────┘
               │
               ▼                          S3
   ┌───────────────────────────┐                        ┌──────────────────────────────┐
   │    OUTPUT PRINTING         │◀───────────────────────│  GENERATE PLATE-MAKING CONDITION │  S6
   │  QUALITY INFORMATION Cn    │                        │  INFORMATION An+1 AND PRINTING │
   └───────────┬───────────────┘                        │  CONDITION INFORMATION Bn+1   │
               │                                         └──────────────┬───────────────┘
               ▼                                                        │
          ╱─────────────╲          S4                                  │
         ╱ DOES PRINTING  ╲      NO                                    │
        ╱ QUALITY INFORMATION Cn ╲────────────────────────────────────┘
        ╲ SATISFY TARGET QUALITY ╱
         ╲   INFORMATION?       ╱
          ╲─────────────╱
               │ YES
               ▼                          S5
   ┌───────────────────────────┐
   │  OUTPUT RECOMMENDED        │
   │ CONDITION INFORMATION Fn   │
   └───────────┬───────────────┘
               │
               ▼
        ┌──────────────┐
        │     End       │
        └──────────────┘
```

# Fig. 4B

```
                    ┌─────────┐
                    │  Start  │
                    └─────────┘
                         │
                         ▼                           S11
        ┌───────────────────────────────────────┐
        │        GENERATE PLATE-MAKING          │◄──────────────┐
        │     CONDITION INFORMATION An AND      │               │
        │   PRINTING CONDITION INFORMATION Bn   │               │
        └───────────────────────────────────────┘               │
              │                        │                         │
       S12    ▼                 S13    ▼                  S16    │
  ┌──────────────────┐   ┌──────────────────┐   ┌──────────────────────────┐
  │  OUTPUT TARGET   │   │  OUTPUT PRINTING │   │ GENERATE PLATE-MAKING    │
  │ INDEX INFORMATION│   │ QUALITY INFORMATION│ │ CONDITION                │
  │        Dn        │   │       Cn         │   │ INFORMATION An+1 AND     │
  └──────────────────┘   └──────────────────┘   │ PRINTING CONDITION       │
              │                    │            │ INFORMATION Bn+1         │
              └──────────┬─────────┘            └──────────────────────────┘
                         ▼                              ▲
                    S14  ╱╲                             │
                       ╱    ╲    DOES PRINTING          │
                     ╱ QUALITY  ╲  NO                   │
                    ╱ INFORMATION Cn╲─────────────────── │
                    ╲ SATISFY TARGET╱
                     ╲ QUALITY      ╱
                       ╲INFORMATION╱
                         ╲  Dn? ╱
                          ╲  ╱
                      YES  │
                         ▼                           S15
        ┌───────────────────────────────────────┐
        │        OUTPUT RECOMMENDED             │
        │     CONDITION INFORMATION Fn          │
        └───────────────────────────────────────┘
                         │
                         ▼
                    ┌─────────┐
                    │   End   │
                    └─────────┘
```

## INTERNATIONAL SEARCH REPORT

| International application No. |
| --- |
| **PCT/JP2024/012060** |

### A. CLASSIFICATION OF SUBJECT MATTER

*G06F 3/12*(2006.01)i; *B41M 1/04*(2006.01)i; *G06N 20/00*(2019.01)i
FI:   G06F3/12 354; B41M1/04; G06F3/12 305; G06F3/12 344; G06F3/12 308; G06N20/00 130

According to International Patent Classification (IPC) or to both national classification and IPC

### B. FIELDS SEARCHED

Minimum documentation searched (classification system followed by classification symbols)

G06F3/12; B41M1/04; G06N20/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | JP 2016-49768 A (FUJIFILM CORPORATION) 11 April 2016 (2016-04-11) entire text, all drawings | 1-9 |
| A | JP 2005-153289 A (MITSUBISHI PAPER MILLS LTD.) 16 June 2005 (2005-06-16) entire text, all drawings | 1-9 |
| A | JP 2014-35575 A (RISO KAGAKU CORP.) 24 February 2014 (2014-02-24) entire text, all drawings | 1-9 |
| A | WO 2020/195024 A1 (PANASONIC INTELLECTUAL PROPERTY MANAGEMENT CO., LTD.) 01 October 2020 (2020-10-01) paragraphs [0027]-[0030], fig. 2 | 1-9 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **29 May 2024** | **11 June 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

**INTERNATIONAL SEARCH REPORT**
Information on patent family members

International application No.

**PCT/JP2024/012060**

| Patent document cited in search report | | | Publication date (day/month/year) | Patent family member(s) | | | Publication date (day/month/year) |
|---|---|---|---|---|---|---|---|
| JP | 2016-49768 | A | 11 April 2016 | WO | 2016/031632 | A1 | |
| | | | | entire text, all drawings | | | |
| JP | 2005-153289 | A | 16 June 2005 | (Family: none) | | | |
| JP | 2014-35575 | A | 24 February 2014 | (Family: none) | | | |
| WO | 2020/195024 | A1 | 01 October 2020 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016049768 A

- US 11575806 B2